Europäisches Patentamt

European Patent Office

Office européen des brevets

(11) Publication number: **0 285 339**
**A1**

## EUROPEAN PATENT APPLICATION

(21) Application number: 88302667.6

(51) Int. Cl.⁴: **C01B 13/34**

(22) Date of filing: 25.03.88

(30) Priority: 01.04.87 US 33411

(43) Date of publication of application:
05.10.88 Bulletin 88/40

(84) Designated Contracting States:
**DE FR GB**

(71) Applicant: **Corning Glass Works**
**Sullivan Park FR-212**
**Corning New York 14831(US)**

(72) Inventor: **Lilley, Edward**
**108 Cascadilla Park**
**Ithaca New York(US)**

(74) Representative: **Smith, Sydney et al**
**Elkington and Fife High Holborn House 52/54**
**High Holborn**
**London WC1V 6SH(GB)**

(54) Metal oxide and metal sulfide particles and production thereof.

(57) Dense metal oxide and metal sulfide particles, i.e., ceramic particles are produced from a liquid base precursor of the ceramic the precursor is selected from the group consisting of: (1) a concentrated solution of a solid active ingredient in the liquid carrier medium; and (2) an active ingredient in a solution, suspension, or dispersion capable of forming a gel phase. The active ingredient is capable of generating the ceramic in situ upon application of heat to the precursor. The process requires generating precursor droplets having a mean diameter of up to about 3 microns and then heating the droplets at a temperature of at least about 400°C for a time sufficient to remove at least a substantial portion of the carrier medium from the droplets. The process further requires converting at least a portion of the solid active ingredient to the ceramic to produce a solid, spherical particle of the ceramic. In general, the particles so produced have a mean diameter of less than about 1 micron.

EP 0 285 339 A1

# METAL OXIDE AND METAL SULFIDE PARTICLES AND PRODUCTION THEREOF

This invention relates to metal oxide particles, metal sulfide particles, and the production of such particles. More particularly, this invention relates to dense metal oxide particles and metal sulfide particles having a generally spherical shape and a mean diameter up to about 1 micron, and methods of producing the same.

For the purpose of convenience, the term "ceramics" will hereinafter be used generically for the group consisting of metal oxides and metal sulfides.

The uses for ceramic powders are numerous and varied, ranging from active ingredients in antiperspirants to ceramic raw materials. In the vast majority of these applications, the size, shape, and density of the particles which make up the powder are of critical importance. For example, the behavior of the particles used as raw materials in the processing of ceramic articles depends largely on particle size and shape, among other parameters. In particular, dense submicron particles having a generally spherical shape pack into a highly dense green body, which allows sintering at lower temperatures and provides greater strength and density in the final ceramic body. As a result, much work and investigation has taken place concerning the physical and chemical characteristics of ceramics and the particles from which they are made. In particular, much research has been devoted in recent years to the production of ceramic powders having mean particle diameters of less than about 10 microns.

One method for the synthesis of metal oxide powders which has been the object of much interest is the evaporation decomposition of solutions (EDS) technique. This technique generally involves atomizing a dilute salt solution to form a spray of droplets and then passing the droplets through a furnace. The heat of the furnace dries the droplets which results in precipitation of the salt. The salt subsequently decomposes to form the oxide powder. One drawback of this technique is that the use of dilute solutions as the precursor to the metal oxide particles is inefficient since dilute solutions will in general provide a very low overall yield of metal oxide powder. As a result, the prior art EDS technique is not readily adaptable to commercial scale use. Another drawback of the EDS process is that the precipitation of a salt from dilute solutions often produces broken and fragmented hollow particles, rather than solid spherical shapes.

Applicant has discovered that these disadvantages of the prior art can be overcome by providing a ceramic precursor selected from the group consisting generally of: 1) concentrated solutions and 2) solutions, suspensions, or dispersions capable of forming a gel phase. As revealed by the review of the prior art which follows, the use of concentrated solutions to make small particles is contrary to prior teachings and the use of materials capable of forming a gel phase for this purpose is not suggested.

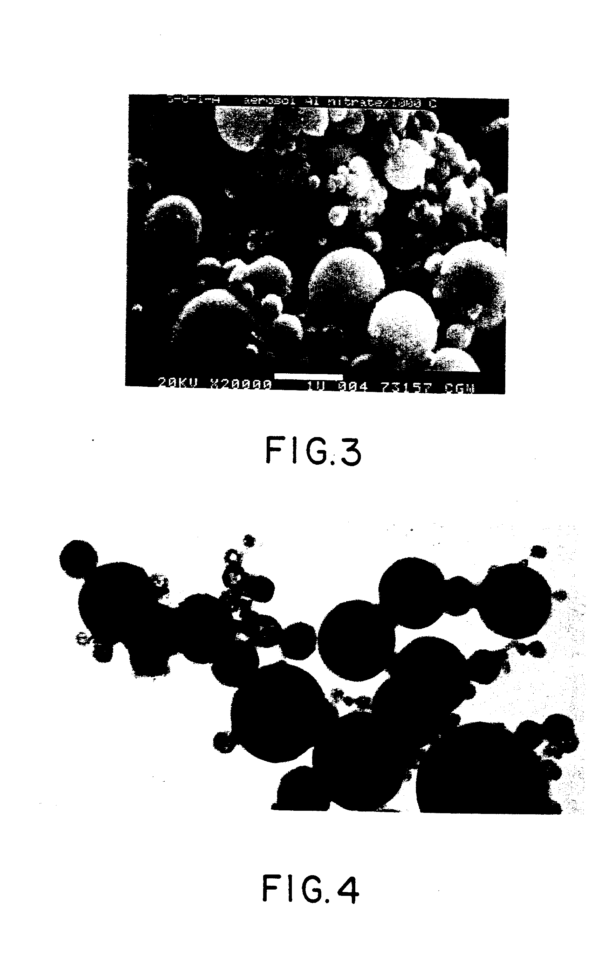

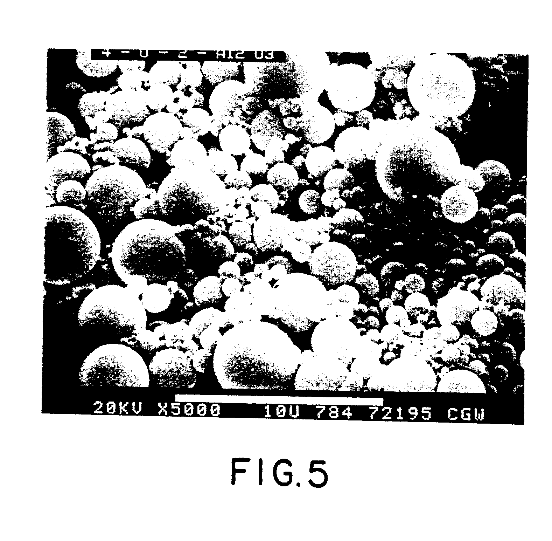

The EDS technique and the particles it produces were investigated by Gardner and Messing in their paper "Preparation of MgO Powder by Evaporative Decomposition of Solutions", Ceramic Bulletin, Volume 63, No. 12 (1984). Salts which were used in this study include magnesium acetate, magnesium chloride, magnesium nitrate, and magnesium sulfate. The concentration of all the salt solutions studied was 1.0 molar. Using magnesium nitrate salt as the oxide precursor, Messing and Gardner produced oxide particles on the order of 5 microns in diameter in the form of hollow spherical shells and shell fragments. Figure 3(b) of that paper shows that each fragment is an aggregate of small, non-spherical MgO particles less than 0.25 microns in diameter. The acetate derived powders prepared in air resulted in individual, non-spherical, apparently unaggregated 0.1 to 0.3 micron MgO particles. These particles were apparently microporous and the result of the fragmentation of larger aggregated particles. In addition, these particles agglomerated to form a low density, open network structure as shown in FIGURE 5 of that paper. Similar results were reported by Messing, Gardner, and Ciminelli, in the paper entitled "Characteristics of EDS-Derived Powders", Science of Ceramics, Volume 12.

The EDS technique was also investigated by O'Halleran, et al, in "EDS for the Preparation of $\alpha$-Fe$_2$O$_3$", Ceramic Bulletin, Volume 57, No. 4 (1978). This work was directed to the use of reagent grade ferric nitrate as the metal oxide precursor. Solutions of 0.15 and 0.3 molar (Fe(NO$_3$)$_3$ were used. Solutions of this concentration are considered to be relatively dilute. The particle shapes are not reported but appear from Figures A and B of that paper to be non-spherical. The average particle size based upon analysis of scanning electron micrographs (SEM) was as follows for each solution:

| Fe(NO$_3$)$_3$ Concentration Molar | Mean Particle Size Microns |
|---|---|
| 0.15 | 1.3 |
| 0.30 | 1.8 |

Although these results would appear to indicate that there is a tendency for particle size to increase with increasing solution concentration, the authors of that paper conclude that the exact relation between average particle size and solution concentration is unclear.

The evaporative decomposition of nitrate solutions was investigated by D.L. Chess, et al, in the article "Precursor Powders for Sulfide Ceramics Prepared by Evaporative Decompositions of Solutions," Communications of the American Ceramic Society, November 1983. This work was directed to the use of oxide powders for the synthesis of ternary sulfide ceramics. Oxide powders were prepared from 0.15 molar and 0.30 molar solutions of calcium and lanthium nitrates. The mean particle sizes were as follows for each solution:

| Salt Concentration; molar | Mean Particle Size Microns | |
|---|---|---|
| | Measured | Calculated |
| 0.15 | 3.0 | 2.5 |
| 0.30 | 5.5 | 3.1 |

In the publication authored by M.J. Ruthner, "Industrial Production of Multicomponent Ceramic Powders (Metal Oxide) by Means of the Spray Roasting Technique", Ceramic Powders (1983), the commercial use of a technique similar to the EDS method is disclosed. This process involves feeding multicomponent metal chloride solutions directly to a fired roaster-furnace, which operates in a fashion similar to a high temperature spray dryer. The metal chloride solution becomes decomposed, yielding a regenerated hydrochloric acid and presintered multicomponent metal oxide powders. This publication indicates that the size of the resulting agglomerated particles is between 15 and 400 microns, while the average primary particle size is between 0.05 and 2.0 microns, where the average particle size was calculated from specific surface area measurements. The publication also indicates that the raw materials for the process are mixed by means of a wet milling operation which results in a slurry containing up to 70% of solids. This slurry is then fired directly into the high temperature spray materials sprayed into the furnace are disclosed.

Other work in the area of metal oxide powder synthesis has been directed to the production of small quantities of powders or aerosols for use in conducting health science research. Kanapilly, G.M., et al, "A New Method for the Generation of Aerosols of Insoluble Particles", Aerosol Science, 1970, Volume 1, pages 313 to 323, disclose a method for the controlled generation of spherical aerosol particles suitable for animal inhalation exposures and other experimental uses. The method consists of (a) nebulizing a solution (or suspension) of the chosen precursor, in chelated or other form, (b) drying the resulting droplets, (c) passing the aerosol through a high temperature heating column to produce spherical oxide particles, and (d) cooling the aerosol with the addition of diluting air. Solid, and apparently spherical particles of several oxides were produce, and although mean particle size was not reported, the micrographs indicate that some of the particles were 1 micron or less. While the study qualitatively investigated the effects of solution concentration on particle size distribution, the solutions investigated were generally very dilute (see Table 1, page 316).

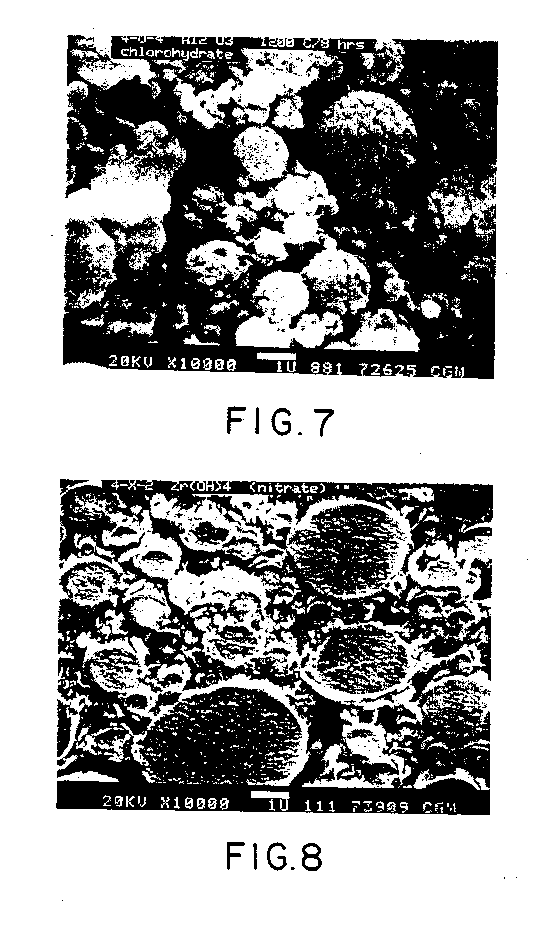

In an article by Hisao Imai and Keiichi Takami, "Preparation of Fine Particles of Carnegieite by a Mist Decomposition Method", Journal of Materials Science, Volume 20, 1985, a mist hydrosol consisting of silica, alumina/NaAlO$_2$ and sodium hydroxide was produced by a supersonic atomization, and treated successively in three furnaces of different temperatures. The resulting particles of carnegieite were approximately 0.5 microns and, although reported by the authors to be spherical, appear to have substantial irregularities based upon the micrographs of FIG. 7 of that paper. Dilute solutions of NaOH were used. Specifically, the following NaOH solution concentrations produced the following mean particle sizes, as determined by SEM:

| NaOH Concentration Wt% | Mean Particle Size Microns |
|---|---|
| 0.40 | 0.48 |
| 0.52 | 0.52 |
| 0.61 | 0.61 |

While the authors concluded that the mean particle size is almost constant, the results tend to indicate that particle size increases with increasing NaOH concentration.

Based upon the teachings of the prior art described above, an increase in the concentration of the starting solution would likely cause an increase in particle size. For example, the experimental results of O'Halleran et al, Chess et al, and Imai et al all tend to indicate that an increase in solution concentration will increase the resultant average particle size. A further indication that this was the heretofore accepted teaching is revealed in the "Instruction Manual for Model 3050 Berglund-LIU Vibrating Orifice Monodisperse Aerosol Generator", Revision: May 1981, by Thermo-Systems, Inc. (TSI). In this manual the manufacturer provides a formula for calculating ultimate particle size. According to this formula, as set out below, an increase in solution concentration will result in increased particle size:

Particle diameter, $DP = (C + I)^{1/3} Dd$

where

C = Volumetric concentration of the non-volatile solute in the aerosol solution

Dd = Diameter of droplet

I = Volumetric fraction of non-volatile impurities in the solvent. (Page 33 of the manual)

Vibrating orifice aerosol generators of the type manufactured by TSI were widely used in the prior art EDS methods to produce large droplets. A formula establishing a similar relationship is taught by Otto G. Raabe in his article "The Generation of Aerosols of Fine Particles", Proceedings of a Symposium by the U.S. Environmental Protection Agency, published by Academic Press in 1976 (see page 75 of that publication).

U.S. Patent No. 4,147,766 - Kozischek is directed to a process and apparatus for making hollow marcospherical particles adapted for use as antiperspirants. The particles have diameters primarily between 15 and 44 microns. The method for making these particles comprises providing a solution containing the materials from which the particles are made, diffusing the solution through small pores by centrifugal force such that the resulting hollow particles have a diameter greater than the pore diameter, and drying the solution droplets in a stream of heated air. In one application, the solution from which the hollow macrospherical particles are produced is a 5/6 basic aluminum chloride. While it is known that solutions of this type will pass through a gel phase upon evaporation of the solvent, the reference does not reveal that this characteristics of the solution is desirable or advantageous for producing solid metal oxide particles having a mean diameter less than about 1 micron.

## SUMMARY OF THE INVENTION

The present invention provides methods of producing dense ceramic particles comprising: providing a liquid-based precursor of the ceramic selected from the group consisting of: (1) a concentrated solution of a solid active ingredient in a liquid carrier medium; and (2) an active ingredient in a solution, suspension, or dispersion capable of forming a gel phase, said active ingredient being capable of generating said ceramic in situ upon application of heat generating droplets of the precursor having a mean diameter of up to about 3 microns; heating the droplets at a temperature of at least about 400°C for a time sufficient to remove at least a substantial portion of the carrier medium from the droplets; and converting at least a portion of the solid active ingredient of the precursor droplets to said ceramic to produce solid, spherical particles of the ceramic having a mean diameter of less than about 1 micron.

It is an object of the present invention to provide commercially feasible processes for producing dense, spherical ceramic particles having a mean diameter of up to about 1 micron.

It is a still further object of the present invention to provide processes for the production of dense multicomponent ceramic particles having a mean diameter of up to about 1 micron and in which a high degree of the chemical homogeneity can be obtained.

It is still a further object of the present invention to provide processes for the production of ceramic particles in which the yield of the metal oxide or metal sulfide is high relative to the starting material.

## BRIEF DESCRIPTION OF THE DRAWING

FIGURE 1 ia a schematic view of the apparatus used in the preferred embodiment to carry out the process of this invention.

FIGURE 2 is a schematic view of the preferred droplet generator depicted in FIGURE 1.

FIGURE 3 is an SEM photograph of aluminum oxide particles made according to the procedure of Example 1.

FIGURE 4 is a TEM photograph of aluminum oxide particles made according to the procedure of Example 1.

FIGURE 5 is an SEM photograph of aluminum oxide particles made according to the procedure of Example 3.

FIGURE 6 is a graphic representation of the particle size distribution for aluminum oxide particles made according to the procedure of Example 3.

FIGURE 7 is an SEM photograph of alpha aluminum particles made according to the procedure of Example 3.

FIGURE 8 is an SEM of milled particles made according to the procedure of Example 4.

FIGURE 9 is an SEM of annealed zirconium oxide particles made according to the procedure of Example 5.

FIGURE 10 is an SEM photograph of the zirconium oxide powders made according to the procedure of Example 6.

FIGURE 11 is an SEM photograph of annealed yttrium oxide particles made according to the procedure of Example 7.

FIGURE 12 is an SEM photograph of the annealed titanium oxide particles made according to the procedure of Example 8.

FIGURE 13 is a TEM photograph of the silicon oxide particles produced according to the procedure of Example 9.

FIGURE 14 is an SEM photograph of the $Al_2/ZrO_2$ particles made according to the procedure of Example 11.

## DETAILED DESCRIPTION OF THE PREFERRED EMBODIMENTS

An important feature of the present invention resides in the selection of the particular ceramic precursor used to generate the desired ceramic particles. According to the present invention, a ceramic precursor is a liquid-based solution, dispersion, suspension, etc., of an active ingredient dispersed or dissolved in a liquid carrier medium. As the term is used herein, an active ingredient is any material which is readily convertible to metal oxide or metal sulfide, typically upon the application of heat thereto. In general, the carrier medium will be relatively inert and will provide a fluid medium for the active ingredient of the precursor. In addition, the carrier medium is generally more volatile than the active ingredient of the precursor. For example, an aqueous solution of aluminum nitrate constitutes an aluminum oxide precursor since aluminum nitrate is readily converted by heat into aluminum oxide, and water is a carrier medium which is relatively inert and volatile with respect to the aluminum nitrate. Accordingly, solutions, dispersions, and suspensions of active ingredients are ceramic precursors according to this invention.

The production of dense ceramic particles according to the methods of this invention includes the step of providing a liquid based precursor of the metal oxide or the metal sulfide selected from the grouping consisting of 1) a concentrated solution of a solid active ingredient in a liquid carrier medium, and 2) a solution, suspension, or dispersion of a solid active ingredient in a liquid carrier medium, said solution, suspension or dispersion being capable of forming a gel phase and said solid active ingredient being capable of generating said metal oxide and/or said metal sulfide in situ upon application of heat. As the term is used herein, a "concentrated solution" of a solid active ingredient is any solution in which the concentration of the active ingredient is at least about 0.5 molar. In a preferred embodiment of the present invention, the ceramic precursor comprises a solution, dispersion, or suspension capable of forming a gel phase. It is known that some materials undergo a transition from a solution or a stable suspension or dispersion to what is known as a "gel phase". While the formation and nature of this gel phase is not thoroughly understood, for the purposes of the present invention it is sufficient to note that transition into the gel phase is generally associated with a rapid increase in the viscosity of the material. The point at which this rapid increase occurs is generally designated as the "gel point". Methods are known in the art for determining the existence of the gel point and, therefore, the presence of a gel phase. For example, a common method of determining the "gel point" of a sol is to observe when the meniscus of the sol in a container no longer remains horizontal when the container is tilted. A known method for causing transition of a precursor into the gel phase is to remove carrier medium from the precursor, generally by the application of heat. Detailed information concerning the nature of sols and gels, in the context of silica chemistry, is contained in the book by Ralph K. Iller, "The Chemistry of Silica Solubility, Polymerization, Colloidal and Surface Properties, in Biochemistry", J. Wiley & Sons, 1979, which is incorporated herein by reference.

Applicant has discovered that in the production of metal oxide particles or metal sulfide particles according to the present invention, it is desirable to provide a precursor solution having an active ingredient selected from the group consisting of salts of the metal, hydroxides of the metal, alkoxides of the metal, and mixtures of these. More particularly, the active ingredient may be a salt selected from the group consisting of chlorides, nitrates, acetates, citrates, lactates, and mixtures of these. While the preferred carrier medium according to the present invention is water, any liquid medium which is volatile relative to the active ingredient is within the scope of this invention. The present invention is capable of producing oxides and sulfides of most metals. The method is particularly well adapted for the production of all forms of aluminum oxide (alumina), barium oxide (baria), magnesium oxide (magnesia), titanium oxide (titania), silicon oxide (silica), yttrium oxide (yttria), zirconium oxide (zirconia), and mixtures of these. Sulfides of cadmium, copper and selenium can also be produced according to the present invention.

Production of dense ceramic particles according to the methods of this invention also includes the step of generating droplets of the provided precursor. In a preferred embodiment, said droplets have a mean diameter of less than about 2 microns. In a more preferred embodiment of the present invention, the precursor droplets have a mean diameter of less than about 1 micron, and even more preferably of about 0.2 microns. Means for generating precursor droplets having the appropriate size according to the present invention are well known in the art.

In the further practice of the present invention, at least a substantial portion of the carrier medium is removed from the droplets. Since the carrier medium is more volatile than the chemically active ingredient of the precursors of the present invention, the application of heat to the precursor droplets is one preferred means for removing the carrier medium from the droplet. Any other method known in the art for removing carrier medium from the droplet, for example vacuum, is also with the scope of this invention. In the case of precursors which are capable of forming a gel phase, removal of the carrier medium from the droplet is an especially important feature of the present invention since removal of the carrier medium will generally cause transition of the droplet from the liquid phase to the gel phase. Although applicant's invention is not limited by or to any particular theory, it is believed that the capillary and surface tension forces associated with the transition into a gel phase tend to densify the solid material in the droplet as it dries and to maintain that material in a relatively spherical configuration.

It is instructive to compare the drying which takes place according to the preferred embodiment of the present invention with the drying associated with the prior art. It is generally believed that drying of a dilute salt precursor droplet results in <u>precipitation</u> of the salt from the solution. See for example Gardner and Messing, "Preparation of Magnesium Oxide Powder by Evaporative Decomposition of Solutions", supra, and Gardner and Messing, "Characteristics of EDS-Derived Powders", supra. According to prior art theory, the dilute salt solution becomes super saturated at the droplet surface resulting in its precipitation before all of the solvent is evaporated. Because the precipitated salt forms a hard layer of low permeability, an internal gas pressure builds up as a result of the continuing vaporization of the internal solvent. In some cases, this internal pressure causes the shell to break and fragment, resulting in nonspherical, hollow particles. In other cases, the surface of the droplet foams and expands as the precipitate melts and the internal gas pressure is relieved. This will generally result in large, very porous particles.

It is believed that the unique drying of the droplets which takes place according to the present invention will provide a method for producing multicomponent metal oxide particles having a high degree of chemical homogeneity. Evaporation of the carrier medium from the precursor droplets of the present invention, particularly precursor droplets which are capable of forming a gel phase, takes place progressively throughout the droplet. This type of evaporation, in turn, results in a dry particle having a composition which is believed to be uniform throughout. In addition, it is preferred according to the present invention that the provided precursor is well mixed so as to have a uniform chemical composition. As a result, it is expected that each precursor droplet will have substantially the same composition as every other precursor droplet. Overall, therefore, it is anticipated that multicomponent ceramic particles having a high degree of both intraparticle and interparticle chemical homogeneity can be produced according to the present invention. For example, it is believed that highly homogeneous particles of $BaTiO_3$ can be produced according to the present invention using a stoichiometric mixture of Dupont's "TYSOR-La" and barium lactate as a precursor for the present invention. It is also believed that homogeneous particles of $Y_3 Al_5 O_{12}$ may be produced

using a precursor comprising yttrium and aluminum sulfates dissolved in water as prepared by the procedure described by DeWith and VanDijk, in the Materials Resource Bulletin, 19, 1669-1674 (1984). It is also believed that homogeneous particles of lanthium modified lead zirconate titante (PZLT) powders may be formed using as a precursor the aqueous nitrate solutions described in the paper by John Thomas, Jr. "Chemical Preparation of PZLT Powders from Aqueous Nitrate Solutions", General of the American Ceramic Society, 53, 421 (1974).

Heating of the droplets to remove the carrier medium is generally conducted at a temperature of at least about 400°C for a period sufficient to evaporate a substantial portion of the carrier. Generally 5-10 seconds is sufficient for this step. Lower temperatures can be used, depending on such conditions as the degree of vacuum which may be present. Temperatures as high as about 1200°C can be used but are generally unnecessary. However, if the step of generating the metal oxide or metal sulfide itself from the solid active ingredient is to be performed simultaneously with removal of the carrier medium, as described below, then such relatively high temperatures may be preferred.

Either simultaneous with or subsequent to the step of removing carrier medium from the precursor droplet, the present invention provides the step of converting at least a portion of the solid active ingredient of the precursor droplets to the metal oxide or the metal sulfide to produce substantially solid, spherical particles from said droplets, said particles having a mean diameter of up to about 1 micron. In a preferred embodiment of this invention, the solid active ingredient is converted to the metal oxide or the metal sulfide itself by heating the droplet at a temperature and for a time sufficient to effect the conversion. The time and temperature, as those skilled in the art will recognize, will be dependent upon the identity of the active ingredient. This conversion step can be performed in the same heating step during which the carrier medium is evaporated or can be performed in a subsequent operation on the droplets from which the carrier medium has been removed. In either case, final ceramic particles which are solid and substantially spherical, having a mean diameter of up to about 1 micron, are provided.

As the term is used herein, a metal oxide particle is an individual particle which contains at least a measurable portion of the metal oxide therein. As the term is used herein, a metal sulfide particle is an individual particle which contains at least a measurable portion of the metal sulfide therein. As the term is used herein, a ceramic particle is an individual particle which contains at least a measurable portion of metal oxide or metal sulfide or both therein. As the term is used herein, an individual particle is a particle which is essentially free from strong interparticle contact and/or forces. As the term is used herein, the mean particle diameter is the number mean diameter as determined according to the following formula:

$$\mu = \frac{Dp}{N}$$

where

$\mu$ is mean particle diameter

Dp is the summation of the particle diameters in the collection

and

N is the number of individual particles in the collection.

In a preferred embodiment of the present invention, the above described steps of removing the carrier and converting the active ingredient are carried out together by heating the droplet at a temperature of at least about 1000°C for a period of at least about 5 seconds. While applicant does not intend to be bound by any particular theory, it is believed that heating the droplets according to the preferred embodiment results in a method in which the removing and the generating steps are carried out at least in part simultaneously.

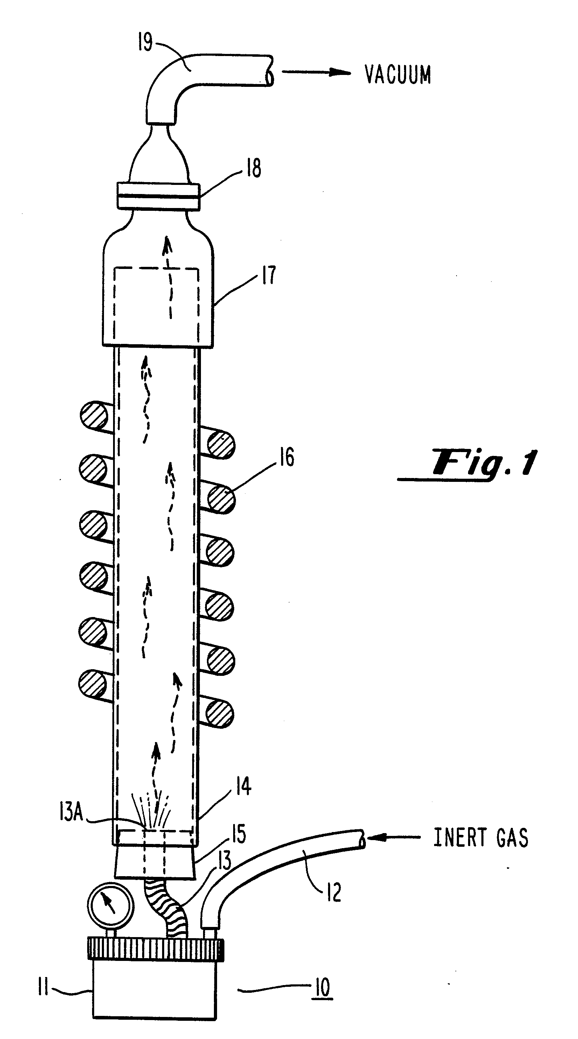

An apparatus which can be used to carry out the method of the present invention is disclosed - schematically in FIGURE 1. A droplet generator, generally designated as 10, comprises a reservoir 11, an inlet tube 12, and an outlet tube 13. The inlet tube is connected to a source of inert gas as indicated, while the outlet tube 13 is sealingly engaged in rubber stopper 15. Rubber stopper 15 is in turn sealingly engaged in the lower end of furnace tube 14. At least a portion of furnace tube 14 is wrapped by heating coils 16. Heating coils 16 are connected to an energy source such as steam or electricity (not shown). Millipore filter holder 17 is disposed about the upper end of furnace tube 14. Millipore filter holder 17 contains filter paper, designated by the symbol 18. The upper end of millipore filter holder 17 is connected to vacuum tube 19, which receives a vacuum as shown.

In operation, reservoir 11 of droplet generator 10 contains a precursor of the ceramic to be produced. According to principles well known in the art, droplet generator 10 causes a spray or mist of droplets to be expelled from the upper end 13A of tube 13. Due to vacuum applied at the upper end of millipore filter holder 17, the droplets move in an upflow fashion through furnace tube 14. The interior of the coil wrapped portion of furnace tube 14 is kept at a predetermined temperature. As the precursor droplets pass upward through the furnace tube, they are converted to dense particles having a mean diameter of up to about 1 micron. The dry solid particles then pass from the upper end of furnace tube 14 and into filter holder 17, where they are collected on filter paper 18.

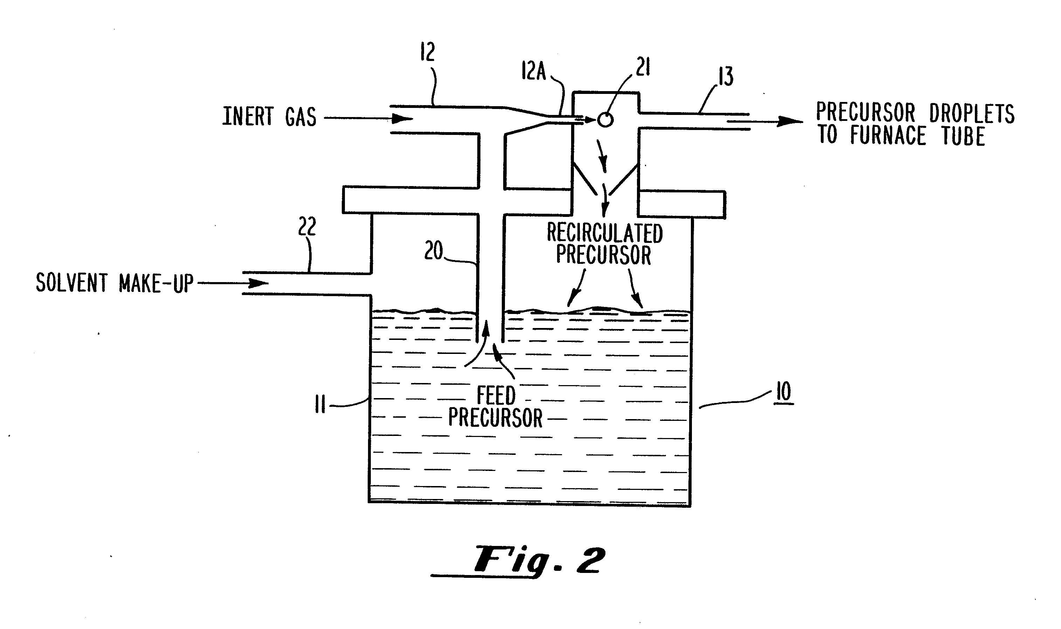

According to the present invention, a ceramic precursor is provided batch wise or continuously to reservoir 11 of droplet generator 10. In the experimental apparatus which was used to generate the results reported in the examples below, droplet generator 10 was jet atomizer Model No. 9302A, made by Thermo-Systems, Inc. (TSI). In other embodiments, the droplet generator 10 may be vibrating orifice, an ultrasonic nebulizer, or any other means known in the art for generating fine aerosol droplets. Referring now to FIGURE 2, the preferred apparatus used for generating metal oxide precursor droplets is revealed - schematically. Precursor contained in reservoir 11 of droplet generator 10 is drawn up through feed tube 20 an is entrained by the inert gas which enters through tube 12. A gas jet containing entrained precursor is expelled from the nozzle portion 12A of tube 12 to produce fine aerosol droplets of the precursor. The droplet sizes according to this invention may range from between about 0.1 micron and about 3 microns, depending upon the precursor, atomizer gun, and other factors. In the most preferred embodiment, the mean droplet size is between about 0.1 micron and about 1 micron. The fine aerosol droplets which are thus produced are carried along by the inert gas and into tube 13 where they are transferred to furnace 14. Any large droplets which exit from nozzle 12A impinge upon baffle 21 and drip back into reservoir 11. It has been found that the operation of an atomizer gun of this type may cause evaporation and removal of carrier medium from the gun at a higher rate than removal of the active ingredient. This phenomenon is believed to occur as a result of carrier medium evaporating from the large droplets which impinge upon baffle 21. As a result of this evaporation, a more concentrated precursor returns to reservoir 11. Continuous operation of droplet generator 10 in this manner will gradually cause an increase in the concentration of the precursor contained in reservoir 11. As noted earlier, it may be desirable for the initial charge of precursor to reservoir 11, or the precursor feed to the reservoir, to be concentrated in the active ingredient of the precursor in order to maximize the amount of powder formed in any given time period. The exact concentration of active ingredient must be balanced against the evaporation that occurs within the gun, which may cause the solubility limit of the active ingredient to be exceeded and a solid to form in the jet. In order to alleviate this problem, it is desirable to provide means for introducing make up carrier medium into reservoir 11. For example, carrier medium makeup tube 22 is provided as a means for maintaining or reducing the concentration of the precursor.

Referring once again to FIGURE 1, the precursor droplets are drawn through outlet tube 13 and into furnace tube 14. The droplets then pass into that portion of furnace tube 14 wrapped by heating coils 16, hereinafter referred to as the "hot zone". In the preferred embodiment, the hot zone is held at a temperature of at least about 400°C. As the precursor droplets pass through the hot zone of furnace tube 14, evaporation of the carrier medium from the precursor occurs. In addition to evaporation of the carrier medium from the precursor droplet, heating of the droplet in the furnace also causes the active ingredient of the precursor to be at least partially decomposed or converted into the ceramic. Temperatures which are particularly effective for drying and decomposition of the metal oxide precursor according to preferred embodiments of this invention range from about 400°C to about 1000°C. In the experimental apparatus, the residence time in the one foot long hot zone of the nominally two and a half inch furnace tube was approximately 5 seconds.

Once the dried particles pass from the hot zone of the furnace, sufficient unheated furnace tube is suppllied so that the particles are collected on millipore filter 18 at a temperature of about 100°C. Applicant has found that use of a filter paper 18 having 0.45 micron pores did not function acceptably in the experimental apparatus since flow through the filter paper eventually became so restricted so as to cause flow of powder around the millipore filter holder 17. Applicant has found that the use of Whatman No. 42 papers having a nominal pore size of 3 microns is satisfactory. Papers of this size are able to collect submicron particles because particles which impinge upon the filter quickly stick to the filter and build up a layer of attached material upon which other particles subsequently deposit. Even in this case, however, particle build up on the filter paper eventually becomes so thick that flow through the filter becomes restricted and the particles escape.

In embodiments of the invention in which conversion to the ceramic is intended to take place in a separate operation, the particles are collected and heated to a temperature, and for a period, sufficient to affect the conversion.

In order to demonstrate the production of ceramic particles according to the present invention, several experiments were performed using the experimental apparatus described. These experiments are the basis for all of the specific, non-limiting examples which follow.

## EXAMPLE 1

### Aluminum Oxide Particles from Concentrated Aluminum Nitrate Solution

An aluminum nitrate solution was used as the precursor for this example. Aluminum nitrate having the formula $Al(NO_3)_3 \cdot 9H_2O$ was the active ingredient of the precursor while water was the carrier medium. In a first run, 220 gms. of the aluminum nitrate were dissolved in 100 milliliters (ml) of the aqueous carrier medium at approximately 50°C to produce a clear solution. This represents a solution concentration of about 5 molar. It is known that a precursor of this type does not gelate upon evaluation of the aqueous carrier medium. Using argon gas at about 2.7 atmospheres as an atomizing gas, precursor droplets having an expected mean diameter of about 0.2 micron were produced. The argon gas was supplied at a rate of about 10 liters per hour, resulting an approximately 5 sec. residence in the hot zone of the furnace. The run lasted about 20 minutes and the hot zone of the furnace was held at temperature of about 400°C and about 0.26 gms of powder were collected.

In a second run, 62 mls of aluminum nitrate were dissolved in 62 mls of water at 50°C. Using argon gas at about 2 atmospheres as an atomizing gas, precursor droplets having an expected mean diameter of about 0.2 micron were produced. The argon gas was supplied at a rate of about 10 liters per hour, resulting in an approximately 5 second residence time in the hot zone of the furnace. The temperature of the furnace was held at about 1000°C. The run lasted about 17 minutes and about 20 grams of powder were collected.

The powders collected in these runs were then analyzed by differential thermal analysis (DTA), thermo gravimetric analysis (TGA), x-ray diffraction, scanning electron micrograph (SEM) and transmission electron micrograph (TEM).

FIGURE 3 reveals a SEM photograph of the powders as collected from the 1000°C run. This figure shows that the particles were generally solid, spherical particles having a mean diameter of less than about 1 micron.

The effect of heat treatment on the physical and chemical nature of the particles produced in the 400°C run was then studied. X-ray diffraction patterns taken after annealing at various temperatures indicate the following impact on crystalline form:

| Annealing Temperature, °C | Annealing Time, hrs. | Crystal Form |
|---|---|---|
| 400 | 10 | Amorphous |
| 600 | 20 | Amorphous |
| 815 | 1 | $\gamma$ |
| 900 | 1 | $\gamma$ |
| 1000 | 1 | $\gamma$ |
| 1100 | 0.1 | $\alpha + \gamma$ |
| 1200 | 1 | $\alpha$ |

Particles collected from the 1000°C run were also found to be amorphous prior to any heat treatment.

The DTA/TGA technique is especially useful for studying particles which may be at different stages of decomposition after evaporation and heating according to the present invention. These analyses indicated a rapid loss of weight i.e., approximately 25%, between room temperature and 400°C, for the powders collected from the 400°C run. This indicates that the precursor, while passing through the 400°C furnace, not only lost water by evaporation, but that significant decomposition took place as well. That is, for the decomposition of dehydrated $Al(NO_3)_3$ to $Al_2O_3$, a total expected loss of 40% would be expected, the loss of only 25% thus indicates that substantial decomposition of the precursor had occurred. Between 400°C and 1200°C in the TGA, there is a steady loss of weight, accounting for about 3% of the weight of the sample. The DTA suggest the onset of crystallization at about 900°C and the formation of $\alpha\text{-}Al_2O_3$ at about 1200°C. For the 1000°C run powders, the TGA shows no substantial loss of weight below 700°C, and a loss of only about 3.5% between 700°C and 1100°C.

The powders produced by the 400°C run were also examined for changes in morphology by SEM. This powder, when heated for three (3) hours at 1000°C, appeared not to exhibit any substantial change in

9

morphology, although it is anticipated that there was some shrinkage of the particles. Upon further heating to 1200°C for one hours, the particles appeared to remain spherical. However, some sintering of the smaller particles had apparently occurred, and there are a few markings on the approximately 1 micron diameter particles which may be grain boundaries. These same particles, i.e., after heating to 1200°C, were analyzed by TEM, as shown in Fig. 4. Some of the smaller particles show the presences of various irregularly shaped pores. While applicant does not intend to be limited by or to any theory, it is believed that these pores probably formed during decomposition of the precursor. Electron diffraction patterns of some of the smaller particles, e.g., about 0.3 microns, indicate that the $\alpha$-$Al_2O_3$ particles are single crystals.

## EXAMPLE 2

### Aluminum Oxide Particles From Aluminum Hydroxide Sol

An aluminum hydroxide sol was used as the precursor for this example. Aluminum hydroxide having the formula AlO(OH) was the active ingredient of the precursor while water was the carrier medium. The sol was made by first hydrolyzing aluminum sec butoxide in an excess of water at 75°C, i.e., one mole butoxide to 100 moles of water, to form a slurry. 0.072 moles of HCl were then added to the slurry to form an acidified slurry. The acidified slurry was heated at 80°C for a few days. The slurry gradually cleared, giving rise to the aluminum oxide precursor. It is known that a precursor of this type passes through a gel phase upon removal of sufficient aqueous carrier medium.

The precursor was provided to the reservoir of the atomizer gun. Using argon as an atomizing gas, precursor droplets having an expected mean diameter of about 0.2 microns were produced. In the first run, the hot zone of the furnace was held at a temperature of about 400°C. In a second run, the hot zone of the furnace was held at a temperature of about 1000°C.

The powders collected in these two runs were then analyzed by x-ray diffraction and SEM.

The 400°C run produced particles which were found to be spherical and about the same size as those generated from the aluminum nitrate precursor.

The effect of heat treatment on the particles produced in the 400°C run was then studied. X-ray diffraction patterns of the particles taken after the particles were annealed at 1200°C for one hour indicated the existence of the alpha crystal form.

## EXAMPLE 3

### Aluminum Oxide Particles of 5/6 Basic Aluminum Cholorhydroxide Complex

The basic aluminum halides are examples of basic aluminum compounds suitable for use as the active ingredient in the precursors of the present invention. A representative formula is: $AL_n(OH)_xA_yXH_2O$ wherein x and y need not be integers but x plus y equals 3n, X is a quantity from 2 to 4 which need not be an integer, and A is chlorine, bromine, iodine or mixtures thereof. For this example, 5/6 basic aluminum hydroxide having the formula $[Al_2(OH)_5Cl]$ was used. For convenience brackets are used to enclose groups of chemical elements which are not necessarily all of the elements of the molecular structure, and do not mean to exclude $H_2O$ groups. In this example, a 5/6 basic aluminum chlorlhydroxide available from Reheis Chemical Company, Division of Armor Pharmaceutical Company, sold under the trademark "CHLOROHYDROL" was used undiluted in its 50% aqueous solution form. In this example, therefore, the active ingredient of the precursor is 5/6 basic aluminum chlorohydroxide while the carrier medium is water. It is known that a precursor of this type passes through a gel phase upon removal of sufficient aqueous carrier medium.

The precursor was stored at room temperature and then provided to the reservoir of the atomizer gun. A series of runs were conducted using argon gas at between about 1.3 and 3.5 atmospheres as an atomizing gas. Precursor droplets having an expected mean diameter of about 0.2 microns were produced. The argon gas was supplied at a rate of about 10 liters per hour, resulting in an approximately 5 second residence time in the hot zone of the furnace. In a set of runs, which lasted on average about 10 minutes, the hot zone of the furnace was held at a temperature of about 400°C. On average, about 0.25 grams of powder were collected.

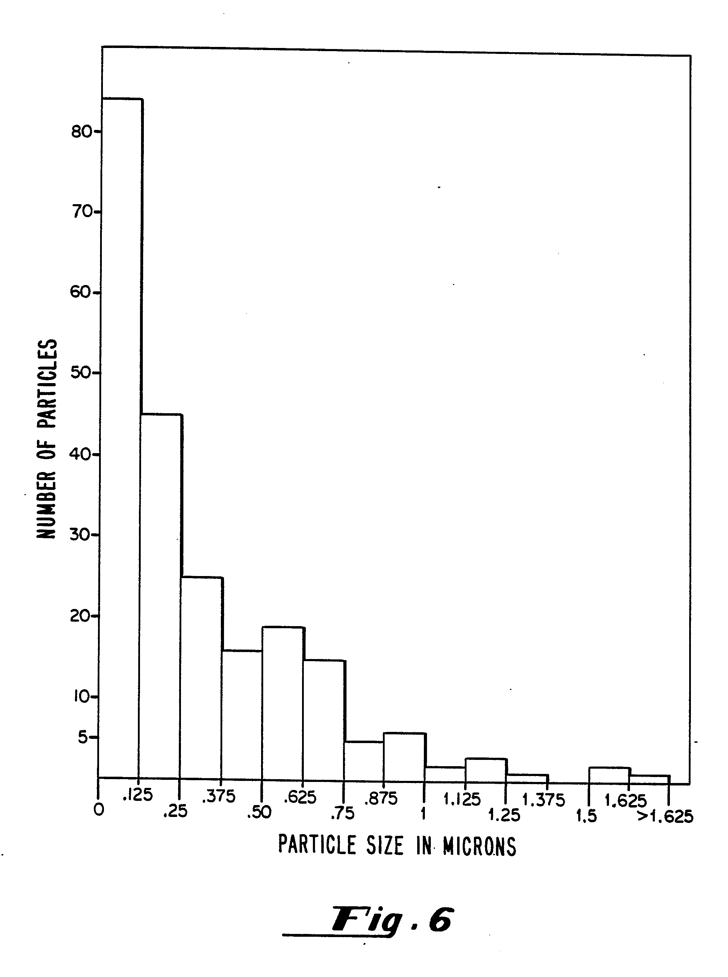

FIGURE 5 reveals an SEM photograph of the powders as collected from these runs. This figure shows that the particles were generally solid, spherical particles having a mean diameter of less than about 1 micron. As can be seen in FIGURE 5, the particles generated were nearly perfectly spherical. A plot of the particle size versus number of particles for the samples shown in Figure 5 is disclosed in Figure 6. Figure 6 clearly indicates that the mean particle size in this case was well below 1 micron.

Pycnometry measurements showed that particles produced with the furnace held at about 1000° were typically about 75% of theoretical density.

The effect of heat treatment on the physical and chemical nature of the particles produced was then studied. X-ray diffraction patterns taken after the powders were annealed at various temperatures indicate the following impact on the crystalline form of the particles:

| Annealing Temperature, °C | Annealing Time, hrs. | Crystal Form |
|---|---|---|
| 400 | 2 | Amorphous |
| 600 | 16 | Slightly Crystalline |
| 850 | 1 | $\gamma$ |
| 1000 | 3 | $\gamma + \alpha$ |
| 1200 | 1 | $\alpha$ |

The powders produced were also examined for changes in morphology by SEM. The powder, when heated for 3 hours at 1000°C, did not appear to exhibit any substantial change in morphology. However, upon further heating to 1200°C for 1 hours, at which temperature the alpha phase is formed, the surface of the spheres exhibited a wormlike structure. A microtomed section of the powder after heating to 1200°C for 1 hours approximately 700 angstroms thick was analyzed by TEM and is shown in Figure 7.

**EXAMPLE 4**

**Zirconium Oxide Particles from Zirconium Nitrate Sols**

Zirconium hydroxy nitrate sols are examples of compounds suitable for use as the active ingredient in the precursors of the present invention. Zirconium hydroxy nitrate having the formula $Zr(OH)(NO_3)_3.5H_2O$ was the active ingredient of the precursor for this example and water was the carrier medium. In particular, the sol used for this example was obtained from the Nyacol Company. The mean size of the particles held in colloidal suspension of this precursor was between 5 and 10 nanometers. The precursor had a pH of between 0.7 and 1, a specific gravity of 1.32, and a viscosity of 8 cps. It is known that this precursor passes into a gel phase upon removal of sufficient carrier medium.

The precursor was stored at room temperature and then provided to the reservoir of the atomizer gun. A series of runs using argon gas between about 2 and about 2.7 atmospheres was used as an atomizing gas. Precursor droplets having an expected mean diameter of about 0.2 microns were produced. The argon gas was supplied at the rate of about 10 liters per hour, resulting in an approximately 5 second residence time in the hot zone of the furnace. The runs lasted, on average, about 20 minutes and the hot zone of the furnace was held at a temperature of about 400°C. On average, about 0.58 grams of powder were collected.

The porosity of the particles was examined by milling an array of the particles and then examining the surface with SEM, as shown in Figure 8. As revealed by this SEM, the spherical particles show some slight surface roughness but no apparent porosity.

**EXAMPLE 5**

**Zirconium Oxide Particles from Zirconium Hydroxy Acetate Sol**

A zirconium hydroxy acetate sol was used as the zirconium oxide precursor for this example. A zirconium hydroxy acetate complex was the active ingredient of the precursor and water was the carrier medium. In particular, the zirconium hydroxy acetate sol used in this example was provided by the Nyacol

11

Company. The mean size of the particles held in the colloidal suspension of this precursor was between about 5 and 10 nanometers. The precursor of this example has a pH of about 2.7, a specific gravity of about 1.26, and a viscosity of about 10 cps. It is known that a precursor of this type passes through a gel phase upon evaporation of the aqueous carrier medium.

The precursor was stored at room temperature and then provided to the reservoir of the atomizer gun. Using argon gas at between about 1.3 and 2.5 atmospheres as an atomizing gas, precursor droplets having an expected mean diameter of about 0.2 microns were produced. The argon gas was supplied at a rate of about 10 liters per hour. On average, the residence time of each precursor droplet in the hot zone was approximately 5 seconds. In a series of runs, the hot zone for each run of the furnace was held at a temperature of about 400°C for about 20 minutes and on average about 40 grams of powder were collected.

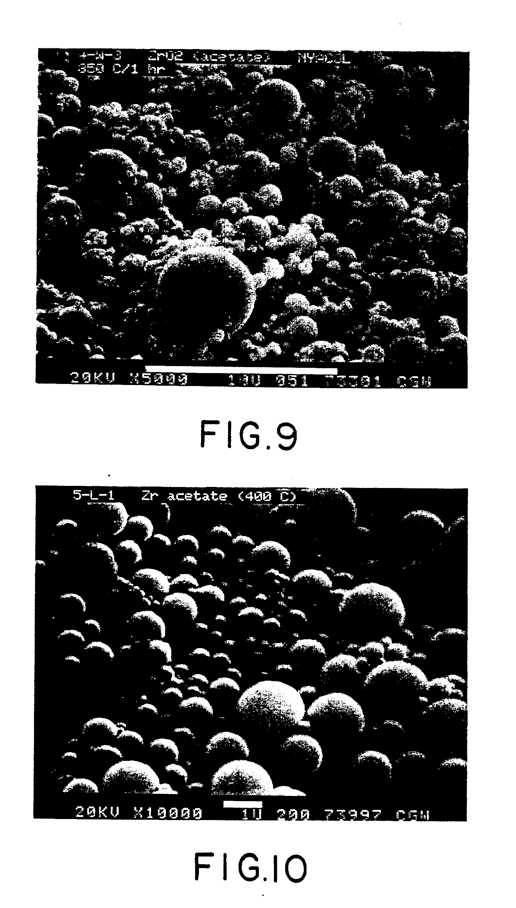

The effect of heat treatment on the physical and chemical nature of the particles produced was then studied. X-ray diffraction patterns taken after annealing at 850°C indicate that the crystal form of the particles was partially monoclinic and partially tetragonal. An SEM photograph of these annealed powders is revealed in Figure 9.

## EXAMPLE 6

### Zirconium Oxide Particles From Zirconyl Acetate Sol

Zirconyl acetate sol obtained from Magnesium Electron Ltd. was used as the zirconium oxide precursor for this example. The undiluted sol, as supplied by Magnesium Electron Ltd., contains an equivalent concentration of about 22 weight percent zirconia.

This sol was provided undiluted to the reservoir of the atomizer gun. Using argon gas at about 2.7 atmospheres as an atomizing gas, precursor droplets having an expected mean diameter of about 0.2 microns were produced. In a series of runs, the argon gas was supplied at a rate of about 10 liters per hour, resulting in approximately 5 seconds residence time in the hot zone of the furnace. The hot zone of the furnace was held at a temperature of about 400°C for about 60 minutes per run and on average about 2.7 grams of powder per run were collected.

Figure 10 reveals an SEM photograph of the powders as collected from this experiment. This figure shows that the particles were generally solid, spherical particles having a mean diameter of less than about 1 micron. Pyconometric measurements showed that particles produced with the furnace held at about 1000°C were typically about 75% of theoretical density.

## EXAMPLE 7

### Yttrium Oxide Particles From Yttrium Hydroxy Acetate Sol

A yttrium hydroxy acetate sol was used as the yttrium oxide precursor for this example. Yttrium hydroxy acetate was the active ingredient of the precursor and water was used as the carrier medium. In particular, yttrium hydroxy acetate sol supplied by Nyacol Chemical Company was used. It is known that this precursor passes through a gel phase upon removal of sufficient carrier medium.

The precursor was stored at room temperature and then provided to the reservoir of the atomizer gun. Using argon gas at between about 2 and 2.5 atmospheres as an atomizing gas, precursor droplets having an expected mean diameter of about 0.2 microns were produced from a series of runs. The argon gas was supplied at a rate of about 10 liters per hour. The average precursor droplet had a residence time of approximately about 5 seconds in the hot zone of the furnace. On average, the hot zone of the furnace was held at a temperature of about 400°C for about 20 minutes and about 0.25 grams of powder were collected per run.

Analysis of the resulting powders reveal that the powder was made up of particles having a mean diameter of approximately 1.0 microns in the shape of distorted spheres.

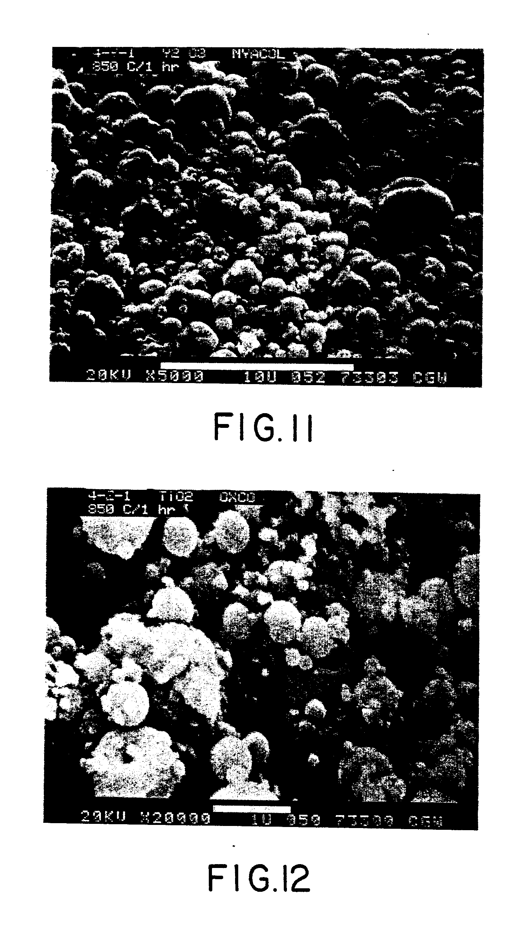

The effect of heat treatment on the physical and chemical nature of the particles produced was then studied. X-ray diffraction patterns taken after annealing at 850°C indicate that the particles had a bcc crystal structure. An SEM photograph of these annealed particles is revealed in Fig. 11.

## EXAMPLE 8

### Titanium Oxide Particles

A titanium oxide precursor obtained from the Oxitane Company designated as "T3-EEZ" was used as the precursor for this example. Applicant theorizes that the sol was a partially hydrolyzed alkoxide.

The precursor was provided to the reservoir of the atomizer gun. Using argon gas at about 2.5 atmospheres as an atomizing gas, precursor droplets having an expected mean diameter of about 0.2 microns were produced. The argon gas was supplied at a rate of about 10 liters per hour. The average precursor particle had residence time in the hot zone of the furnace of about 5 seconds. In a series of runs, the hot zone of the furnace was held at a temperature of about 4000°C and each run lasted, on average, about 30 minutes. On average, about 0.16 grams of powder were collected per run.

The effect of heat treatment on the physical and chemical nature of the particles was then studied. X-ray diffraction patterns taken after annealing at 850°C for 1 hour indicate the particles had a BCC crystalline form. An SEM photograph of these annealed powders is revealed in Fig. 12.

## EXAMPLE 9

### Silicon Oxide Particles

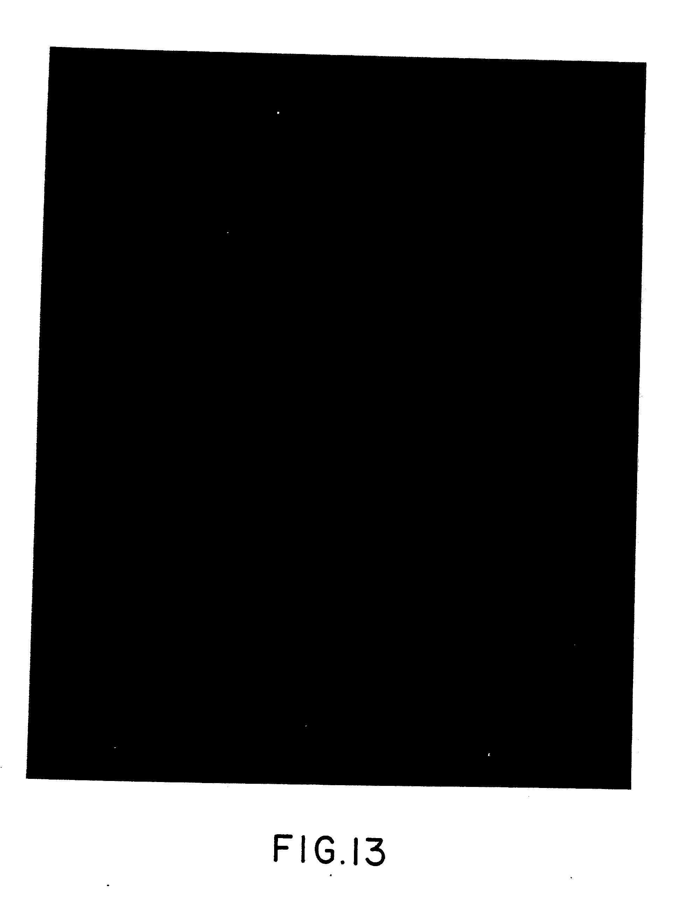

The procedure disclosed by Sakka and Kamiya in the Journal of Noncrystalline Solids, 48, 31-46 (1982) was utilized to prepare the silicon oxide precursor used for this example. More particularly, 84.7 grams of silicon ethoxide, 146.4 grams of water, 18.75 grams of ethanol and 0.15 grams HCl were slowly mixed according to the procedure described in the above-references paper. The precursor thus produced was allowed to sit for a few days until the initial signs of gelation began to appear, and then the precursor was provided to the reservoir of the atomizer gun. Using argon gas at between about 2 and 2.5 atmospheres as an atomizing gas, precursor droplets having an expected mean diameter of about 0.2 micron were produced. The argon gas was supplied at a rate of about 10 liters per hour. The average precursor droplet had a residence time of approximately 5 seconds in the hot zone of the furnace. In a series of runs, the hot zone of the furnace was held at a temperature of about 1000°C for about 20 minutes per run on average and , on average, about 0.45 grams of powder were collected per run. The particles thus produced were very uniformly dense spheres of silicon oxide as shown in the TEM photograph of Figure 13.

## EXAMPLE 10

### Cadmium Sulfide Particles

The procedure disclosed by Ma and Bube in the Journal of the Electrochemical Society, 124, 1430 (1977) was utilized to prepare the precursor used for this example. More particularly, 11.40 grams of $CdCl_2$ (2.5 $H_2O$) dissolved in 500 ml of water was added to 7.6 grams of thiorea dissolved in 500 ml water. The precursor thus produced was provided to the reservoir of the atomizer gun. Using argon gas at between about 2 and 2.5 atmospheres as an atomizing gas, precursor droplets having an expected mean diameter of about 0.2 micron were produced. The argon gas was supplied at a rate of about 10 liters per hour. The average precursor droplet had a residence time of approximately 5 seconds in the hot zone of the furnace. In a series of runs, the hot zone of the furnace was held at a temperature of about 400°C for about 70 minutes per run on average and on average about 0.05 grams of powder were collected per run. The resultant powder was identified by x-ray diffraction as cadmium sulfide.

## EXAMPLE 11

## Al₂/ZrO₂ Particles

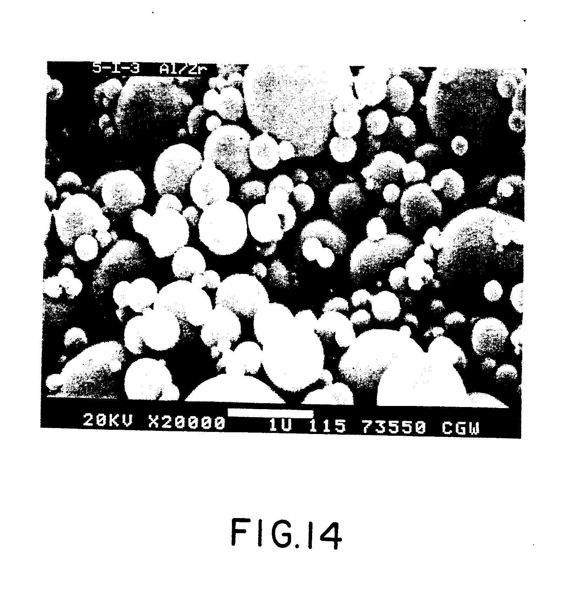

A solution sold under the trade name "REZAL" by Reheis Corporation was the precursor used for this example. The precursor was provided to the reservoir of the atomizer gun, and argon gas at about 2 atmospheres was used as the atomizing gas. The precursor droplets thus produced had an expected mean diameter of about 0.2 microns. The argon gas was supplied at a rate of about 10 liters per hour. The average precursor droplet had a residence time of approximately 5 seconds in the hot zone of the furnace. In a series of runs, the hot zone of the furnace was held at a temperature of about 400°C for about 20 minutes per run on average and on average about 0.40 grams of powder were collected per run. The particles thus collected were found to be solid spherical particles having a mean diameter of less than about 1 micron as shown in the SEM of Figure 14.

The present invention may be embodied in other specific forms without departing from the spirit or essential attributes thereof. Accordingly, reference should be made to the appended claims rather than to the foregoing specification as indicating the scope of the present invention.

## Claims

1. Process for producing dense ceramic particles, dense particles of metal oxide(s) or metal sulfide(s) or mixtures thereof, comprising
    (a) providing a liquid based precursor of the ceramic, metal oxide(s), or metal sulfide(s) consisting of

    a concentrated solution of a solid active ingredient in a liquid carrier medium, or a solution, suspension or dispersion of a solid active ingredient in a liquid carrier medium, the solution, suspension, or dispersion being capable of forming a gel phase, said solid active ingredients being capable of conversion into said ceramic, metal oxide(s) or sulfide(s) upon application of heat,
    (b) generating droplets of said precursor having a mean diameter of up to about 3 microns;
    (c) heating the droplets at a temperature at least about 400° for a time sufficient to remove at least a substantial portion of the carrier medium from the droplets; and
    (d) converting at least a portion of the solid active ingredient of the precursor droplets to said ceramic, metal oxide(s) and/or metal sulfide(s) to produce substantially solid, spherical particles of the metal oxide from said droplets, said particles having a mean diameter of less than about 1 micron.

2. The process as recited in claim 1 wherein said generating step provides droplets having a mean diameter of less than about 1 micron.

3. The process of claim 1 wherein said generating step comprises passing said precursor through a vibrating orifice.

4. The process of claim 1 wherein said generating step comprises nebulizing said precursor ultrasonically.

5. The process of claim 1 wherein said generating step comprises forcing said precursor through an atomizing jet.

6. The process as recited in claim 1 wherein said converting step comprises heating said droplets.

7. The process as recited in claim 1 wherein said heating step and said converting step comprise introducing said droplets into a heated chamber.

8. The process of claim 1 wherein the concentration of said active ingredient in said concentrated solution is at least about 1 or 2 molar.

9. The process of claim 8 further comprising the step of adding solvent to the provided concentrated solution to prevent a substantial increase in the concentration of the solution.

10. The process of claim 8 further comprising the step of maintaining a substantially constant concentration of the provided concentrated solution by adding solvent to the solution.

11. The process as recited in claim 1 wherein said precursor is said solution, suspension, or dispersion and said heating step causes gelation of said droplets, and said converting step comprises heating said gelated droplets.

12. The process as recited in claim 11 wherein said heating step and said converting step comprise introducing said droplets into a heating chamber.

13. The process of claim 12 wherein said heated chamber is maintained at a temperature of at least about 400°C, and preferably at least about 1000°C.

14. The process of claim 1 wherein the metal oxide is selected from the group consisting of alumina, baria, magnesia, titania, silica, yttria, and zirconia or mixtures thereof.

15. The process of claim 14 wherein said active ingredient of said precursor is selected from the group consisting of salts of the metal, hydroxides of the metal, alkoxides of the metal, and mixtures of these.

16. The process of claim 15 wherein the active ingredient is a salt selected from the group consisting of chlorates, nitrates, acetates, citrates, lactates, and mixtures of these.

17. The process of claim 1 wherein the precursor is selected from the group consisting of suspensions or dispersions of a solid active ingredient in a liquid carrier medium, said suspension or dispersion being capable of forming a gel phase.

18. The process of claim 17 wherein the precursor is selected from the group consisting of sols and slurries.

19. The process of claim 18 wherein the active ingredient of said precursor is a basic aluminum halide.

20, The process of claim 14, wherein said droplets have a mean diameter up to about 0.2 micron.

21. The process of any one of the preceding claims, wherein the ceramic is selected from the group consisting of aluminum oxides, aluminum sulfides, barium oxides, barium sulfides, magnesium oxides, magnesium sulfides, titanium oxides, titanium sulfides, silicon oxides, silicon sulfides, yttrium oxides, yttrium sulfides, zirconium oxides and zirconium sulfides.

_Fig.1_

PRECURSOR DROPLETS TO FURNACE TUBE

INERT GAS

SOLVENT MAKE-UP

RECIRCULATED PRECURSOR

FEED PRECURSOR

13

21

12A

12

20

22

11

10

*Fig. 2*

FIG.3

FIG.4

FIG.5

_Fig. 6_

FIG. 7

FIG.8

FIG.9

FIG.1O

FIG.11

FIG.12

0 285 339

FIG.13

FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 024 178 (UK ATOMIC ENERGY AUTHORITY) * Claim 1; page 3, lines 27-35; page 4, line 33 - page 5, line 9 * | 1-21 | C 01 B 13/34 |
| A | CHEMISTRY AND INDUSTRY, vol. 22, no. 34, August 1970, pages 1097-1104; J.K. DAWSON: "Industrial research at AERE: high temperature chemical technology" * Page 1102, paragraphs 5,6 * | 1-21 | |
| A | CHEMICAL ABSTRACTS, vol. 100, no. 16, April 1984, page 131, no. 123497h, Columbus, Ohio, US; & JP-A-58 223 606 (NIPPON SODA CO., LTD) 26-12-1983 * Abstract * | 1-21 | |
| A,D | JOURNAL OF MATERIALS SCIENCE, vol. 20, 1985, pages 1823-1827, Chapmann and Hall Ltd; H. IMAI et al.: "Preparation of fine particles of carnegieite by a mist decomposition method" | | |
| A | CHEMICAL ABSTRACTS, vol. 106, no. 8, February 1987, page 139, no. 52610a, Columbus, Ohio, US; K. OKUYAMA et al.: "Production of ultrafine metal oxide aerosol particles by thermal decomposition of metal alkoxide vapors" & AICHE J. 1986, 32(12), 2010-19 | | TECHNICAL FIELDS SEARCHED (Int. Cl.4)  C 01 B C 01 F C 01 G |
| A,D | AMERICAN CERAMIC SOCIETY BULLETIN, vol. 63, no. 12, December 1984, pages 1498-1501, Columbus, Ohio, US; T.J. GARDNER et al.: "Preparation of MgO powder by evaporative decomposition of solutions" | | |

The present search report has been drawn up for all claims

| Place of search | Date of completion of the search | Examiner |
|---|---|---|
| THE HAGUE | 13-07-1988 | ZALM W.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)